# EUROPEAN PATENT APPLICATION

(11) **EP 4 329 207 A1**
(43) Date of publication of application: **28.02.2024**
(21) Application number: 22811481.5
(22) Date of filing: 11.04.2022
(51) Int. Cl.: H04B 1/50, H04B 1/00, H04L 5/00

(54) **COMMUNICATION CIRCUIT FOR PERFORMING COMMUNICATION BY USING PLURALITY OF FREQUENCY BANDS, AND ELECTRONIC DEVICE COMPRISING SAME**

(30) Priority: 25.05.2021 KR 20210067077
(71) Applicant: Samsung Electronics Co., Ltd., Suwon-si, Gyeonggi-do 16677 (KR)
(72) Inventor: HWANG, Nayoung, Suwon-si, Gyeonggi-do 16677 (KR); PAIK, Minchull, Suwon-si, Gyeonggi-do 16677 (KR); PARK, Jungsik, Suwon-si, Gyeonggi-do 16677 (KR)
(74) Representative: Gulde & Partner
(86) International application number: PCT/KR2022/005226
(87) International publication number: WO 2022/250288

(57) **Abstract**

According to various embodiments, in a communication circuit and an electronic device comprising the communication circuit, the communication circuit comprises: a first RFIC for processing transmission signals and reception signals of a plurality of frequency bands; a second RFIC for processing the reception signals of the plurality of frequency bands; a first front end module (FEM) electrically connected to the first RFIC and the second RFIC; and a second front end module electrically connected to the first RFIC and the second RFIC, wherein: the first RFIC is connected to a plurality of transmission chains included in the first front end module and the second front end module, and at least some reception chains from among a plurality of reception chains included in the first front end module and the second front end module; the second RFIC is connected to some other reception chains from among the plurality of reception chains included in the first front end module and the second front end module; and frequency bands of the reception signals capable of being processed by the first RFIC can be the same as frequency bands of the reception signals capable of being processed by the second RFIC. Other various embodiments are possible.

## Description

### [Technical Field]

Various embodiments of the present disclosure relate to a communication circuitry and an electronic device which perform communication using a plurality of frequency bands.

### [Background Art]

Various electronic devices, such as a smartphone, a tablet PC, a portable multimedia player (PMP), a personal digital assistant (PDA), a laptop personal computer (PC), or a wearable device, are being distributed.

The electronic devices may support communication methods (e.g., dual connectivity or carrier coupling) using a plurality of frequency bands. The communication method using the plurality of frequency bands may have a larger frequency bandwidth than a communication method using a single frequency band. The communication method using a plurality of frequency bands having relatively large frequency bandwidths may implement a high transfer rate or reception rate of data compared to another communication method.

The electronic device may include a plurality of front end modules that process a signal having each frequency band between an antenna and an RFIC in order to support the communication method using a plurality of frequency bands.

### [Disclosure of Invention]

### [Technical Problem]

As the number of frequency bands supported by an electronic device is increased, the complexity of a structure of a communication circuitry may be increased. For example, as the number of communication methods supported by the electronic device is increased, the support range of an RF integrated circuit (RFIC) for each of the communication methods may be increased. Since the design complexity of the RFIC and the size of the RFIC may be increased as the support range of the RFIC is increased, the communication circuitry may be implemented as a method using a plurality of RFICs that support different communication methods. At least two RFICs included in the communication circuitry may support different communication methods. All of the RFICs included in the communication circuitry perform the processing (e.g., a frequency conversion) of a transmission signal for the output of the transmission signal, so that power consumption may be increased.

### [Solution to Problem]

Communication circuitry according to various embodiments of the present disclosure may include a first RF integrated circuit (RFIC) configured to process a transmission signal and a reception signal having a plurality of frequency bands; a second RFIC configured to process a reception signal having the plurality of frequency bands; a first front end module (FEM) electrically connected to the first RFIC and the second RFIC; and a second FEM electrically connected to the first RFIC and the second RFIC. The first RFIC may be connected to at least some reception chains, among a plurality of transmission chains included in the first FEM and the second FEM and a plurality of reception chains included in the first FEM and the second FEM. The second RFIC may be connected to other some reception chains, among the plurality of reception chains included in the first FEM and the second FEM. A frequency band of a reception signal capable of being processed by the first RFIC may be identical with a frequency band of a reception signal capable of being processed by the second RFIC.

An electronic device according to various embodiments of the present disclosure may include a communication processor and a communication circuitry. The communication circuitry may include a first RF integrated circuit (RFIC) configured to process a transmission signal and a reception signal having a plurality of frequency bands; a second RFIC configured to process a reception signal having the plurality of frequency bands; a first front end module (FEM) electrically connected to the first RFIC and the second RFIC; and a second FEM electrically connected to the first RFIC and the second RFIC. The first RFIC may be connected to at least some reception chains, among a plurality of transmission chains included in the first FEM and the second FEM and a plurality of reception chains included in the first FEM and the second FEM. The second RFIC may be connected to other some reception chains, among the plurality of reception chains included in the first FEM and the second FEM. A frequency band of a reception signal capable of being processed by the first RFIC may be identical with a frequency band of a reception signal capable of being processed by the second RFIC.

### [Advantageous Effects of invention]

The communication circuitry and the electronic device including the communication circuitry according to various embodiments of the present disclosure each include at least two RFICs having the same capability related to the processing of a transmission signal and a reception signal, and may enable one RFIC to process transmission signals having different frequency bands. Power consumption of the communication circuitry can be reduced because one RFIC performs the processing of a transmission signal and the other RFIC performs the processing of a reception signal.

### [Brief Description of Drawings]

FIG. 1 is a block diagram of an electronic device according to various embodiments of the present disclosure.
FIG. 2 is a block diagram of an electronic device for supporting legacy network communication and 5G network communication according to various embodiments.
FIG. 3 is a block diagram of an electronic device according to various embodiments of the present disclosure.
FIG. 4 is a diagram illustrating a block diagram of an RFIC of a communication circuitry according to various embodiments of the present disclosure.
FIG. 5A is a diagram illustrating a connection structure for a communication circuitry according to various embodiments of the present disclosure.
FIG. 5B is a diagram illustrating a connection structure for a communication circuitry according to various embodiments of the present disclosure.
FIG. 6A is a diagram illustrating a connection structure for a communication circuitry according to various embodiments of the present disclosure.
FIG. 6B is a diagram illustrating a connection structure for a communication circuitry according to various embodiments of the present disclosure.
FIG. 7 is a diagram illustrating a communication circuitry according to various embodiments of the present disclosure.

### [Mode for the Invention]

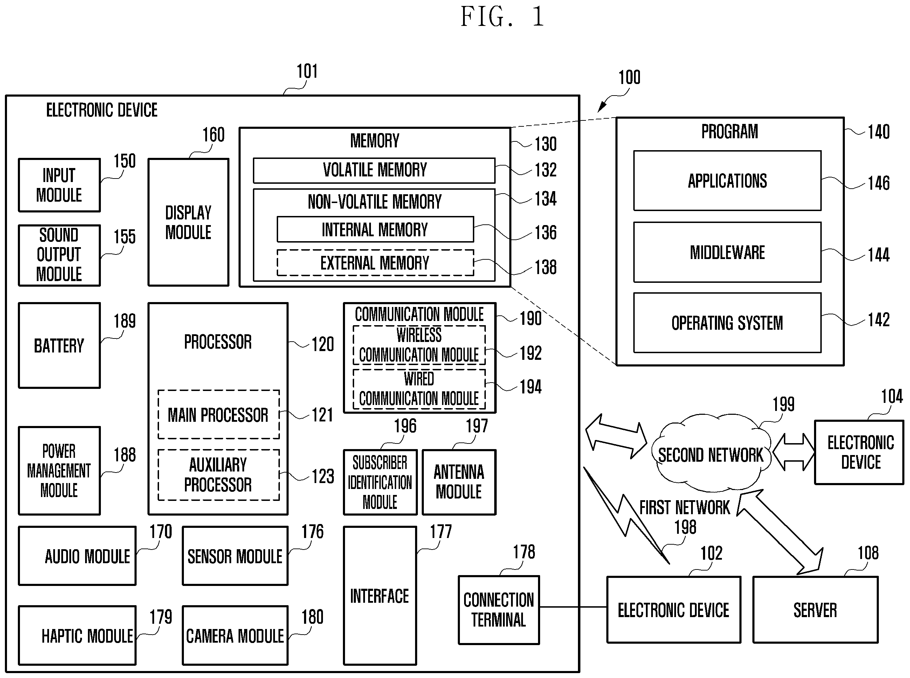

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

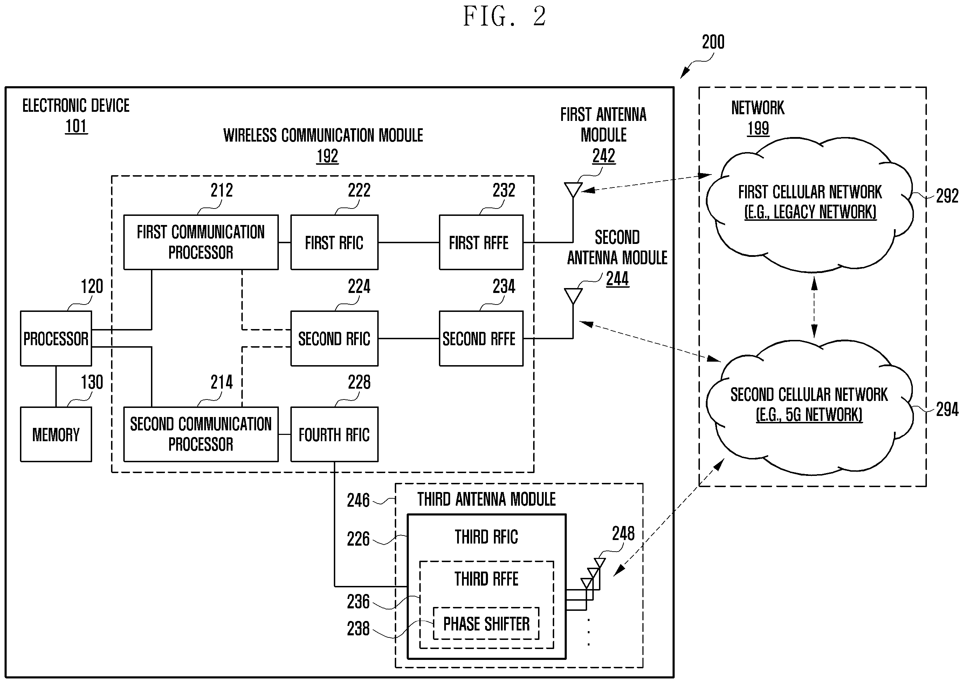

FIG. 2 is a block diagram 200 of an electronic device 101 for supporting legacy network communication and 5G network communication according to certain embodiments. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments, the second network 294 may be a 5G network defined in 3GPP. Additionally, according to an embodiment, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11 GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

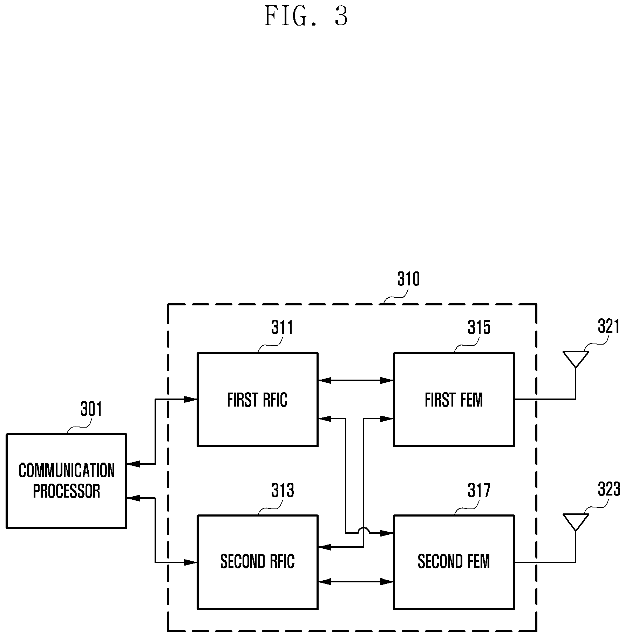

FIG. 3 is a block diagram of an electronic device according to various embodiments of the present disclosure.

With reference to FIG. 3, the electronic device (e.g., the electronic device 101 in FIG. 1) according to various embodiments of the present disclosure may include a communication processor 301 (e.g., the first communication processor 212 in FIG. 2 or the second communication processor 214 in FIG. 2), a communication circuitry 310, a first antenna 321 (e.g., the first antenna module 242, the second antenna module 244, or the third antenna module 246 in FIG. 2) and/or a second antenna 323 (e.g., the first antenna module 242, the second antenna module 244, or the third antenna module 246 in FIG. 2).

According to various embodiments of the present disclosure, the communication processor 301 may receive or transmit control data or user data through short-range wireless communication (e.g., Wi-Fi or Bluetooth) or cellular wireless communication (e.g., 4-th generation mobile communication or 5-th generation mobile communication). The communication processor 301 may establish a cellular communication connection with a base station through the control data, and may transmit, to the base station, data received from an application processor (e.g., the processor 120 in FIG. 1) or transmit, to the application processor 120, data received from the base station through the established cellular communication.

According to various embodiments of the present disclosure, the communication circuitry 310 may include a first RFIC 311 (e.g., the first RFIC 222, the second RFIC 224, or the fourth RFIC 228 in FIG. 2), a second RFIC 312 (e.g., the first RFIC 222, the second RFIC 224, or the fourth RFIC 228 in FIG. 2), a first front end module (FEM) 315 (e.g., the first RFFE 232), and a second FEM 317 (e.g., the second RFFE 234).

According to various embodiments of the present disclosure, the first RFIC 311 may perform various operations of processing a signal received from the communication processor 301. For example, the first RFIC 311 may perform a modulation operation on the signal received from the communication processor 301. For example, the first RFIC 311 may perform a frequency modulation operation of converting a signal having a baseband into a radio frequency (RF) signal that is used in cellular communication. The first RFIC 311 may also perform a demodulation operation on a signal received from the outside through the first antenna 321 and/or the second antenna 323. For example, the first RFIC 311 may perform a frequency demodulation operation of converting an RF signal into a signal having the baseband.

According to various embodiments of the present disclosure, the second RFIC 313 may perform various operations of processing a signal received from the communication processor 301. For example, the second RFIC 313 may perform a modulation operation on the signal received from the communication processor 301. For example, the second RFIC 313 may perform a frequency modulation operation of converting a signal having a baseband into an RF signal that is used in cellular communication. The second RFIC 313 may also perform a demodulation operation on a signal received from the outside through the first antenna 321 and/or the second antenna 323. For example, the second RFIC 313 may perform a frequency demodulation operation of converting an RF signal into a signal having a baseband.

According to various embodiments of the present disclosure, the communication circuitry 310 may include at least two RF chains for receiving a signal that is radiated from the outside through the first antenna 321 and/or the second antenna 323 or for radiating a signal transmitted by the first RFIC 311 through the first antenna 321 and/or the second antenna 323. For example, the RF chain may mean the moving path of a signal. The RF chain may include various parts (e.g., an amplifier, a switch, or a filter) for amplifying a signal received through the first antenna 321 and/or the second antenna 321 and/or a signal transmitted by the first RFIC 311, for example, and performing an operation of filtering the amplified signal.

According to various embodiments of the present disclosure, the communication circuitry 310 may include at least two RF chains in order to support a communication method using at least two frequency bands. For example, the communication circuitry 310 may support dual connectivity, that is, a data communication method through different cellular communication methods (e.g., 4-th generation cellular communication and 5-th generation cellular communication) or a carrier coupling, that is, a data communication method using a plurality of frequency bands. To this end, the communication circuitry 350 may include the first FEM 310 that outputs a signal through the first antenna 321 or receives a signal through the first antenna 321 and/or the second FEM 320 that outputs a signal through the second antenna 323 or receives a signal through the second antenna 323.

According to various embodiments of the present disclosure, the first RFIC 311 may process a transmission signal and/or a reception signal having a plurality of frequency bands. According to an embodiment, the first RFIC 311 may be connected to a plurality of transmission chains included in the first FEM 315 and/or the second FEM 317, may process (e.g., convert the baseband frequency of a transmission signal into an RF frequency) a transmission signal received from the communication processor 301, and may transmit the processed signal to the plurality of transmission chains included in the first FEM 315 and/or the second FEM 317. Transmission chains included in the first FEM 315, among the plurality of transmission chains, may output a transmission signal received from the first RFIC 311 through the first antenna 321. Transmission chain included in the second FEM 317, among the plurality of transmission chains, may output a transmission signal received from the first RFIC 311 through the second antenna 323.

According to an embodiment, the first RFIC 311 may be connected to a plurality of reception chains included in the first FEM 315 and/or the second FEM 317, may process (e.g., convert the RF frequency of a reception signal into a baseband frequency) a reception signal received from the first antenna 321 and/or the second antenna 323, and may transmit the processed signal to the communication processor 301. Reception chains connected to the first RFIC 311, among the reception chains included in the first FEM 315, may transmit, to the first RFIC 311, the signal received from the first antenna 321. Reception chains connected to the first RFIC 311, among the reception chains included in the second FEM 317, may transmit, to the first RFIC 311, the signal received from the second antenna 323.

According to various embodiments of the present disclosure, the second RFIC 313 may process a reception signal having a plurality of frequency bands. According to an embodiment, the second RFIC 313 may be connected to at least some chains of the plurality of reception chains included in the first FEM 315 and/or the second FEM 317, may process (e.g., convert the RF frequency of a reception signal into a baseband frequency) a reception signal received from the first antenna 321 and/or the second antenna 323, and may transmit the processed signal to the communication processor 301. Reception chains connected to the second RFIC 313, among the reception chains included in the first FEM 315, may transmit, to the second RFIC 313, the signal received from the first antenna 321. Reception chains connected to the second RFIC 313, among the reception chains included in the second FEM 317, may transmit, to the second RFIC 313, the signal received from the second antenna 323.

According to various embodiments of the present disclosure, the first RFIC 311 and/or the second RFIC 313 may be circuits having the same capability in relation to the processing of a transmission signal and the processing of a reception signal. The meaning of the circuits having the same capability may include that a frequency band and/or communication method (e.g., 3^{rd} generation mobile communication (3G), 4-th generation mobile communication (LTE), or 5-th generation mobile communication (NR)) of a transmission signal or reception signal capable of being processed by the first RFIC 311 are the same as a frequency band and/or communication method of a transmission signal or reception signal capable of being processed by the second RFIC 313. For example, the first RFIC 311 and the second RFIC 313 may include various components (e.g., an amplifier and/or a mixer) in order to process a transmission signal. The components for processing the transmission signal, which are included in the first RFIC 311 and the second RFIC 313, are the same components, and may process transmission signals having the same frequency band. As another example, the first RFIC 311 and the second RFIC 313 may include various components (e.g., an amplifier and/or a mixer) for processing a reception signal. The components for processing the reception signal, which are included in the first RFIC 311 and the second RFIC 313, are the same components, and may process reception signals having the same frequency band. According to an embodiment, the first RFIC 311 and the second RFIC 313 are the same circuits, and may be circuits having the same capability.

According to various embodiments of the present disclosure, the second RFIC 313 may not be connected to the transmission chains included in the first FEM 315 and/or the second FEM 317, and may not process a transmission signal although the second RFIC 313 has a component capable of processing the transmission signal.

According to various embodiments of the present disclosure, a frequency band that is processed by the reception chains connected to the first RFIC 311 and a frequency band that is processed by the reception chains connected to the second RFIC 313 may be the same. According to an embodiment, the communication circuitry 310 may be configured so that the first RFIC 311 receives a primary reception signal (primary Rx (PRx)) and the second RFIC 313 receives a diversity reception signal (diversity Rx (DRx)) in a communication method using a specific frequency band. The frequency bands of the primary reception signal and the diversity reception signal may be the same.

According to various embodiments of the present disclosure, a frequency band that is processed by the reception chains connected to the second RFIC 313 may include a frequency band that is processed by the reception chains connected to the first RFIC 311. The communication circuitry 310 may be configured so that the first RFIC 311 receives a reception signal included in a primary component carrier (PCC) and the second RFIC 313 receives a reception signal included in a secondary component carrier (SCC) in a communication method supporting a carrier aggregation.

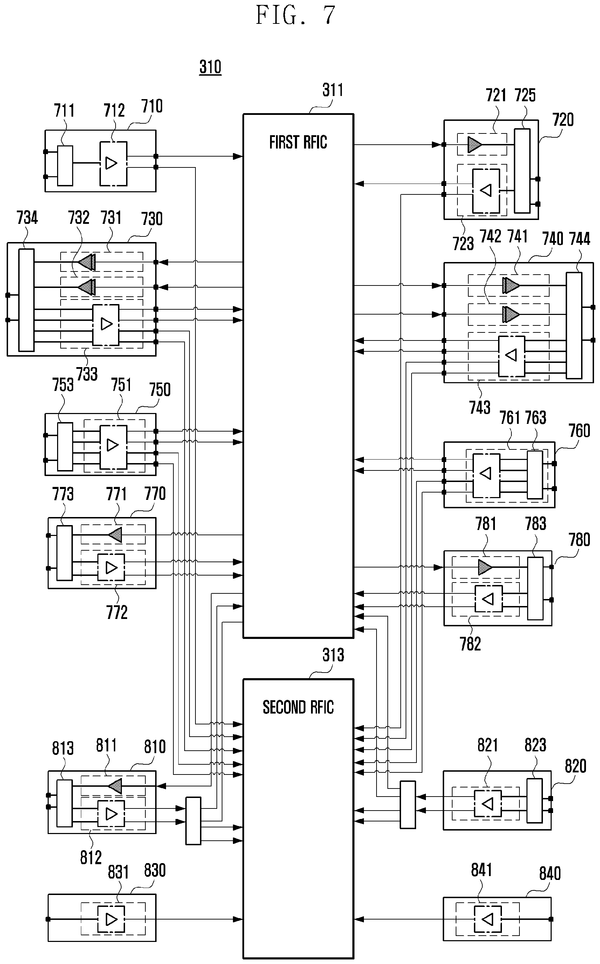

FIG. 3 illustrates that the communication circuitry 310 includes the two FEMs, but may include a plurality of FEMs depending on the simultaneous transmission or reception of signals through different frequency bands that are supported by the communication circuitry 310. An example in which the communication circuitry 310 includes a plurality of FEMs is described later with reference to FIG. 7.

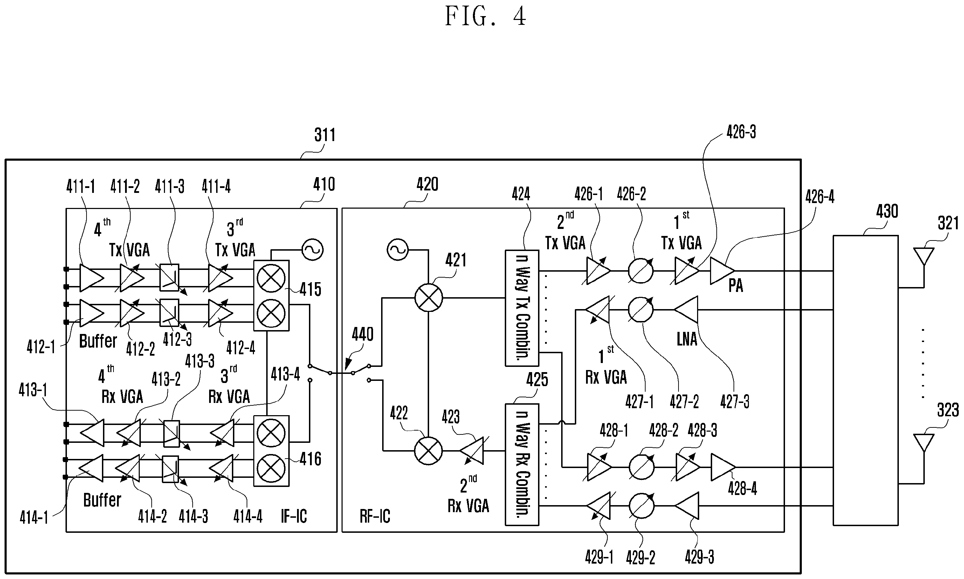

FIG. 4 is a diagram illustrating a block diagram of an RFIC of a communication circuitry according to various embodiments of the present disclosure.

The first RFIC 311 illustrated in FIG. 4 according to various embodiments of the present disclosure is an electronic device illustrated by materializing the first RFIC 311 included in the electronic device illustrated in FIG. 3. The second RFIC 313 may be a circuit having the same capability in relation to the processing of a transmission signal and the processing of a reception signal. The second RFIC 313 may have the same structure as the first RFIC 311 described hereinafter.

The first RFIC (E11) illustrated in FIG. 3 may mean a communication circuitry including n transmission chains and reception chains. Although not illustrated in FIG. 4, the first RFIC 311 may be electrically connected to a first FEM (e.g., the first FEM 315 in FIG. 3) and/or a second FEM (e.g., the second FEM 317 in FIG. 3). The transmission chain of the first RFIC 311 may be electrically connected to the transmission chains of the first FEM 315 and/or the second FEM 317. The reception chain of the first RFIC 311 may be connected to at least some of the reception chains of the first FEM 315 and at least some of the reception chains of the second FEM 317.

According to various embodiments of the present disclosure, the first RFIC 311 may include a middle frequency processing integrated circuit 410 that converts (or up-converts) a baseband signal received from the communication processor 301 into a signal having a middle frequency band and/or that converts (or down-converts) a signal that has a middle frequency band and that is received from an RF frequency processing integrated circuit 420 into a signal having a baseband, and the RF frequency processing integrated circuit 420 that converts (or up-converts) a signal having a middle frequency band into a signal having an RF band and/or that converts (or down-converts) a signal having an RF band into a signal having a middle frequency band.

According to various embodiments of the present disclosure, a first antenna (e.g., the first antenna 321 in FIG. 3) and/or a second antenna (e.g., the second antenna 323 in FIG. 3) that are connected to the first FEM 311 may be connected to a signal separation circuit 430. The signal separation circuit 430 may electrically connect the transmission chains of the first antenna 321 and the first RFIC 311 in the case of a transmission (Tx) mode in which a transmission signal is output and electrically connect the reception chains of the first antenna 321 and the first RFIC 311 in the case of a reception (Rx) mode in which a reception signal is received, in performing TDD communication (e.g., NR). The signal separation circuit 430 may be implemented as a switch if the first FEM 311 supports TDD. The signal separation circuit 430 may be implemented as a filter (e.g., a duplexer) if the first FEM 311 supports FDD. The signal separation circuit 430 may transmit a reception signal that is received through the first antenna 321 and/or the second antenna 323 to the reception chain of the first RFIC 311 and may transmit a transmission signal to be output through the transmission chain of the first FEM 311 to the first antenna 321 and/or the second antenna 323, in performing FDD communication (e.g., LTE).

According to various embodiments, a first transmission chain corresponding to the first antenna 321 may include a first power amplifier 426-4, a first variable gain amplifier 426-3, a phase shifter 426-2, a second variable gain amplifier 426-1, an n way transmission divider 423, or a mixer 421 within the RFIC.

According to various embodiments, the first the power amplifier 426-4 plays a role to amplify power of a transmission signal. The first power amplifier 426-4 may be mounted within the RF integrated circuit 420 or may be mounted outside the RF integrated circuit 420. Each of the variable gain amplifiers 426-1 and 426-3 may perform a Tx auto gain control operation under the control of the communication processor 301. The number of variable gain amplifiers may be increased or decreased according to circumstances. For example, the number of variable gain amplifiers included in the transmission chain in FIG. 4 may be two.

The phase shifter 426-2 according to various embodiments may shift the phase of a signal based on a beamforming angle under the control of the communication processor 301. The n way transmission divider 423 may divide a transmission signal received from the mixer 421 into n signals. The mixer 421 may perform the up-conversion of a signal having a transmission middle frequency (Tx-IF), which is received from the middle frequency processing integrated circuit 410, into a transmission signal (RF band). The mixer 421 may receive signals to be mixed from an internal or external oscillator.

The reception chain of the first RFIC 311 that is electrically connected to the first antenna 321 may include a low noise amplifier 427-3, a phase shifter 427-2, a first variable gain amplifier 427-1, an n way Rx combiner 425, a second variable gain amplifier 423, or a mixer 422 within the wireless frequency processing integrated circuit.

The low noise amplifier 427-3 according to various embodiments may perform the role of low noise amplification on a signal received from the antenna. Each of the variable gain amplifiers 426-1 and 423 may perform an Rx auto gain control operation under the control of the communication processor 301. The number of variable gain amplifiers may be increased or decreased according to circumstances. For example, two variable gain amplifiers 426-1 and 423 may be included in the reception chain illustrated in FIG. 4. The phase shifter 427-2 may shift the phase of a signal in a direction in which a signal that forms a beam travels, under the control of the communication processor 301. The n way combiner 425 may combine signals the phases of which have been shifted and aligned in phase. The combined signal is transferred to the mixer 422 via the second variable gain amplifier 423. The mixer 422 may perform the down-conversion of the received signal from an RF band to an IF band. The mixer 422 may receive signals to be mixed from an internal or external oscillator.

According to various embodiments, the RF frequency processing integrated circuit 420 may include a plurality of transmission chains and a plurality of reception chains. For example, the RF frequency processing integrated circuit 420 may include transmission chains corresponding to the second antenna 323. The transmission chain corresponding to the second antenna 323 may include an amplifier 428-4, variable gain amplifiers 428-1 and 428-3, and a phase shifter 428-2. The reception chains corresponding to the second antenna 323 may include a low noise amplifier 429-3, a phase shifter 429-2, and a variable gain amplifier 429-1.

According to various embodiments, the RF frequency processing integrated circuit 420 may further include a switch 440 that selectively connects the reception chain and/or transmission chain of the RF frequency processing integrated circuit 420. If a middle frequency is high, a transmission line connection between the RF frequency processing integrated circuit 420/the middle frequency processing integrated circuit 410 may be difficult. Upon TDD operation, when the switch 440 selectively connects one of the transmission chain or the reception chain, the number of transmission lines between the RF frequency processing integrated circuit 420 and the middle frequency processing integrated circuit 410 can be reduced.

According to various embodiments, a transmission chain within the middle frequency processing integrated circuit 410 may include a quadrature mixer 415, a third variable gain amplifier 411-4, a low pass filter 411-3, a fourth variable gain amplifier 411-2, and a buffer 411-1. The buffer 411-1 may play a role as a buffer when receiving a balanced Tx I/Q signal from the communication processor 301 so that the signal can be stably processed. The third variable gain amplifier 411-4 and the fourth variable gain amplifier 411-1 may perform a Tx auto gain control role under the control of the communication processor 301. The low pass filter 411-3 may play a role as a channel filter by operating the bandwidth of the Tx IQ signal having a baseband as a cutoff frequency. The cutoff frequency may be variable. The quadrature mixer 415 performs a role to up-convert the balanced Tx I/Q signal into a Tx IF signal.

According to various embodiments, the middle frequency processing integrated circuit 410 may include a plurality of transmission chains. With reference to FIG. 4, the middle frequency processing integrated circuit 410 may further include another transmission chain. The another transmission chain may include a buffer 412-1, variable gain amplifiers 412-2 and 412-4, and a low pass filter 412-3. The transmission chains may be used along with the quadrature mixer 415.

According to various embodiments, a reception chain within the middle frequency processing integrated circuit 410 may include a quadrature mixer 416, a third variable gain amplifier 413-4, a low pass filter low pass filter 413-3, a fourth variable gain amplifier 413-2, and a buffer 413-1. The buffer 413-1 plays a role as a buffer when a balanced Rx I/Q passing through the fourth variable gain amplifier 413-2 is transferred to the communication processor 301 so that the signal can be stably processed. The third variable gain amplifier 413-4 and the fourth variable gain amplifier 413-2 may perform Rx auto gain control under the control of the communication processor 301. The low pass filter 413-3 plays a role as a channel filter by operating the bandwidth of the balanced Rx IQ signal having a baseband as a cutoff frequency. The cutoff frequency may be variable. The quadrature mixer 416 plays a role to generate the balanced Rx I/Q signal through a down-conversion into an Rx-IF signal.

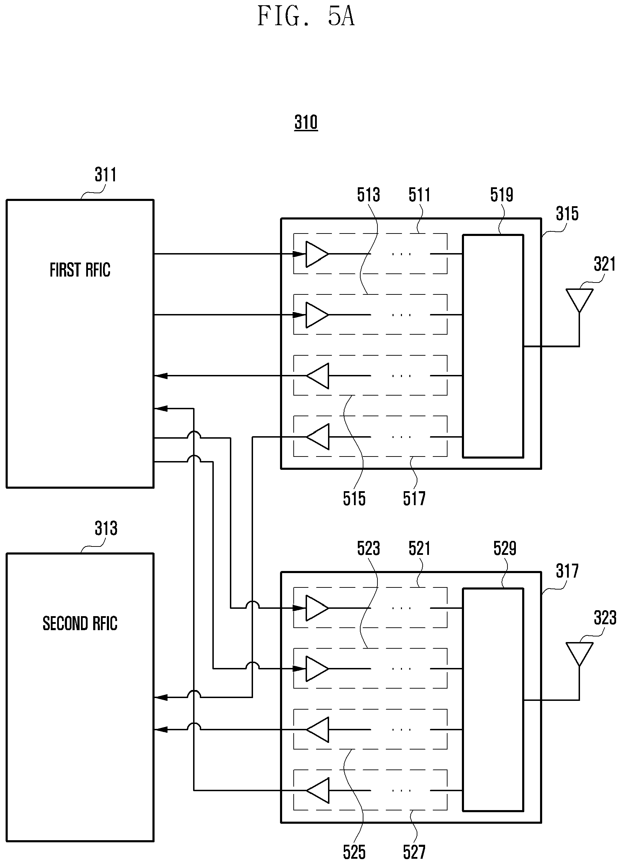

FIG. 5A is a diagram illustrating a connection structure for a communication circuitry according to various embodiments of the present disclosure.

Communication circuitry (e.g., the communication circuitry 310 in FIG. 3) according to various embodiments of the present disclosure may include a first RFIC (e.g., the first RFIC 311 in FIG. 3), a second RFIC (e.g., the second RFIC 313 in FIG. 3), a first FEM (e.g., the first FEM 315 in FIG. 3) and/or a second FEM (e.g., the second FEM 317 in FIG. 3). For a clear description, a description of the same or similar components, among the components illustrated in FIG. 3, is omitted.

According to various embodiments of the present disclosure, the first FEM 315 may include a first transmission chain 511, a second transmission chain 513, a first reception chain 513, a second reception chain 517 and/or a first switch 519.

According to various embodiments of the present disclosure, the first transmission chain 511 may include various parts (e.g., an amplifier and a filter) for outputting a transmission signal having the frequency of a first frequency band (e.g., a mid-band). The second transmission chain 513 may include various parts (e.g., an amplifier and a filter) for outputting a transmission signal having the frequency of a second frequency band (e.g., a high band) different from the first frequency band.

According to various embodiments of the present disclosure, the first reception chain 515 may include various parts (e.g., a low noise amplifier and a filter that filters the frequency of the first frequency band) for transmitting a reception signal having the frequency of the first frequency band. The second reception chain 517 may include various parts (e.g., a low noise amplifier and a filter that filters the frequency of the first frequency band) for transmitting a reception signal having the frequency of the second frequency band.

According to various embodiments of the present disclosure, the first switch 519 may connect at least one chain, among the first transmission chain 511, the second transmission chain 513, the first reception chain 515 and/or the second reception chain 517, and the first antenna 321. If a communication method that is supported by the first FEM 315 is time division duplex (TDD), the first switch 519 may connect one chain, among the first transmission chain 511, the second transmission chain 513, the first reception chain 515 and/or the second reception chain 517, and the first antenna 321 based on a designated time under the control of a communication processor (e.g., the communication processor 301 in FIG. 3). If a communication method that is supported by the first FEM 315 is frequency division duplex (FDD), the first switch 519 may be omitted, and a duplexer (or a diplexer) that separates signals having the first frequency band and the second frequency band may be connected to the first antenna 321.

According to various embodiments of the present disclosure, the second FEM 317 may include a third transmission chain 521, a fourth transmission chain 523, a third reception chain 525, a fourth reception chain 527 and/or a second switch 529.

According to various embodiments of the present disclosure, the third transmission chain 521 may include various parts (e.g., an amplifier and a filter) for outputting a transmission signal having the frequency of a first frequency band (e.g., a mid-band) . The fourth transmission chain 523 may include various parts (e.g., an amplifier and a filter) for outputting a transmission signal having the frequency of a second frequency band (e.g., a high band) different from the first frequency band.

According to various embodiments of the present disclosure, the third reception chain 525 may include various parts (e.g., a low noise amplifier and a filter that filters the frequency of the first frequency band) for transmitting a reception signal having the frequency of the first frequency band. The fourth reception chain 527 may include various parts (e.g., a low noise amplifier and a filter that filters the frequency of the first frequency band) for transmitting a reception signal having the frequency of the second frequency band.

According to various embodiments of the present disclosure, the second switch 529 may connect at least one chain, among the third transmission chain 521, the fourth transmission chain 523, the third reception chain 525 and/or the fourth reception chain 527, and the second antenna 323. If a communication method that is supported by the second FEM 317 is time division duplex (TDD), the second switch 529 may connect one chain, among the third transmission chain 521, the fourth transmission chain 523, the third reception chain 525 and/or the fourth reception chain 527, and the second antenna 323 based on a designated time under the control of the communication processor 301. If communication method supported by the second FEM 317 is frequency division duplex (FDD), the second switch 529 may be omitted, and a duplexer (or a diplexer) that separates signals having the first frequency band and the second frequency band may be connected to the second antenna 323.

According to various embodiments of the present disclosure, the first RFIC 311 may process a transmission signal and/or a reception signal having a plurality of frequency bands. According to an embodiment, the first RFIC 311 may be connected to a plurality of transmission chains (e.g., the first transmission chain 511, the second transmission chain 513, the third transmission chain 521 and/or the fourth transmission chain 523) included in the first FEM 315 and/or the second FEM 317, may process (e.g., convert the baseband frequency of a transmission signal into an RF frequency) the transmission signal received from the communication processor 301, and may transmit the processed signal to the plurality of transmission chains included in the first FEM 315 and/or the second FEM 317. The first RFIC 311 may transmit a transmission signal having the first frequency band to the first transmission chain 511 and/or the third transmission chain 521, and may transmit a transmission signal having the second frequency band to the second transmission chain 513 and/or the fourth transmission chain 523.

According to an embodiment, the first RFIC 311 may be connected to at least some reception chains (e.g., the first reception chain 515, the third reception chain 527), among the plurality of reception chains included in the first FEM 315 and/or the second FEM 317, may process (e.g., convert the RF frequency of a reception signal into a baseband frequency) a reception signal received from the first antenna 321 and/or the second antenna 323, and may transmit the processed signal to the communication processor 301. The first reception chain 515 connected to the first RFIC 311, among the reception chains included in the first FEM 315, may transmit, to the first RFIC 311, the signal received from the first antenna 321. The fourth reception chain 527 connected to the first RFIC 311, among the reception chains included in the second FEM 317, may transmit, to the first RFIC 311, the signal received from the first antenna 323.

According to various embodiments of the present disclosure, the second RFIC 313 may process a reception signal having a plurality of frequency bands. According to an embodiment, the second RFIC 313 may be connected to at least some reception chains (e.g., the second reception chain 517 and/or the third reception chain 525), among the plurality of reception chains included in the first FEM 315 and/or the second FEM 317, may process (e.g., convert the RF frequency of a reception signal into a baseband frequency) a reception signal received from the first antenna 321 and/or the second antenna 323, and may transmit the processed signal to the communication processor 301. The second reception chain 517 connected to the second RFIC 313, among the reception chains included in the first FEM 315, may transmit, to the second RFIC 313, the signal received from the first antenna 321. The third reception chain 525 connected to the second RFIC 313, among the reception chains included in the second FEM 317, may transmit, to the second RFIC 313, the signal received from the first antenna 323.

According to various embodiments of the present disclosure, the first RFIC 311 and/or the second RFIC 313 may be circuits having the same capability in relation to the processing of a transmission signal and the processing of a reception signal. The meaning of the circuits having the same capability may include that a frequency band and/or communication method (e.g., 3^{rd} generation mobile communication (3G), 4-th generation mobile communication (LTE), or 5-th generation mobile communication (NR)) of a transmission signal or reception signal capable of being processed by the first RFIC 311 are the same as a frequency band and/or communication method of a transmission signal or reception signal capable of being processed by the second RFIC 313. For example, the first RFIC 311 and the second RFIC 313 may include various components (e.g., an amplifier and/or a mixer) in order to process a transmission signal. The components for processing the transmission signal, which are included in the first RFIC 311 and the second RFIC 313, are the same components, and may process transmission signals having the same frequency band. As another example, the first RFIC 311 and the second RFIC 313 may include various components (e.g., an amplifier and/or a mixer) for processing a reception signal. The components for processing the reception signal, which are included in the first RFIC 311 and the second RFIC 313, are the same components, and may process reception signals having the same frequency band. According to an embodiment, the first RFIC 311 and the second RFIC 313 are the same circuits, and may be circuits having the same capability.

According to various embodiments of the present disclosure, the second RFIC 313 may not be connected to transmission chains (e.g., the first transmission chain 511, the second transmission chain 513, the third transmission chain 521 and the fourth transmission chain 523) included in the first FEM 315 and/or the second FEM 317, and may not process a transmission signal although the second RFIC 313 has a component capable of processing the transmission signal.

According to various embodiments of the present disclosure, a frequency band (e.g., the first frequency band and the second frequency band) that is processed by reception chains (e.g., the first reception chain 515 and the fourth reception chain 527) connected to the first RFIC 311 and a frequency band (e.g., the first frequency band and the second frequency band) that is processed by reception chains (e.g., the second reception chain 517 and the third reception chain 525) connected to the second RFIC 313 may be the same. According to an embodiment, the communication circuitry 310 may be configured so that the first RFIC 311 receives a primary reception signal (primary Rx (PRx)) and the second RFIC 313 receives a diversity reception signal (diversity Rx (DRx)) in a communication method using the first frequency band or the second frequency band. The frequency bands of the primary reception signal and the diversity reception signal may be the same.

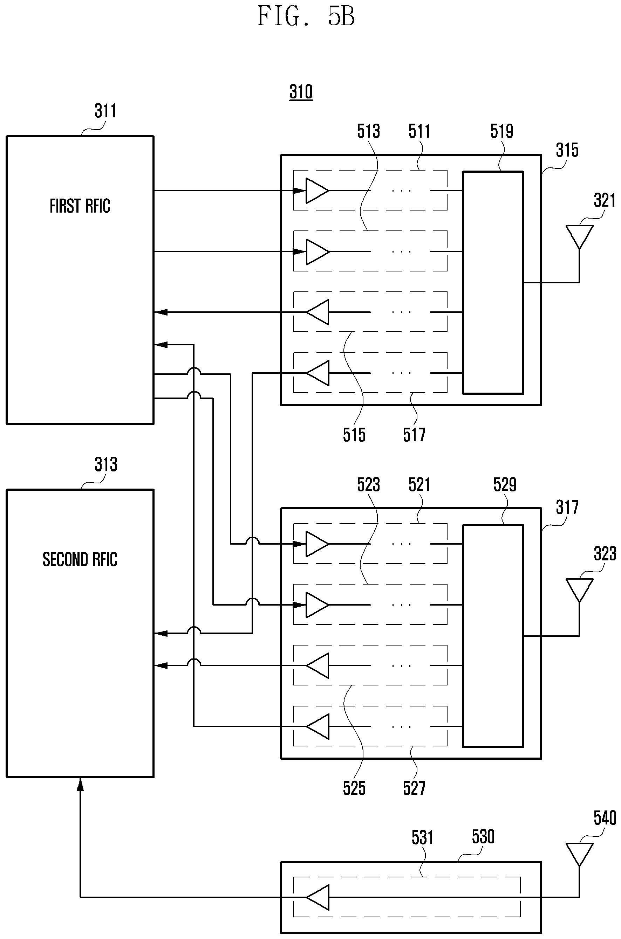

FIG. 5B is a diagram illustrating a connection structure for a communication circuitry according to various embodiments of the present disclosure.

Communication circuitry (e.g., the communication circuitry 310 in FIG. 3) illustrated in FIG. 5B may be a communication circuitry to which a component for receiving a reception signal having a third frequency band has been further added in the communication circuitry 310 illustrated in FIG. 5A.

Communication circuitry (e.g., the communication circuitry 310 in FIG. 3) according to various embodiments of the present disclosure may include a first RFIC (e.g., the first RFIC 311 in FIG. 3), a second RFIC (e.g., the second RFIC 313 in FIG. 3), a first FEM (e.g., the first FEM 315 in FIG. 3), a second FEM (e.g., the second FEM 317 in FIG. 3) and/or the third FEM 530. For a clear description, a description of the same or similar components, among the components illustrated in FIG. 5A, is omitted.

According to various embodiments of the present disclosure, the third FEM 530 may include a fifth reception chain 531. The fifth reception chain 531 may include various parts (e.g., a low noise amplifier and a filter that filters the frequency of the third frequency band) for transmitting a reception signal having the frequency of a third frequency band different from the first frequency band and the second frequency band. The third FEM 530 may transmit, to the second RFIC 313, the reception signal that has the third frequency band and that has been received through a third antenna 540.

According to various embodiments of the present disclosure, the second RFIC 313 may process a reception signal having a plurality of frequency bands. According to an embodiment, the second RFIC 313 may be connected to at least some reception chains (e.g., the second reception chain 517, the third reception chain 525 and/or the fifth reception chain 531), among the plurality of reception chains included in the first FEM 315, the second FEM 317 and/or the third FEM 530, may process (e.g., convert the RF frequency of a reception signal into a baseband frequency) a reception signal received from the first antenna 321, the second antenna 323 and/or the third antenna 540, and may transmit the processed signal to the communication processor 301. The second reception chain 517 connected to the second RFIC 313, among the reception chains included in the first FEM 315, may transmit, to the second RFIC 313, the signal received from the first antenna 321. The third reception chain 525 connected to the second RFIC 313, among the reception chains included in the second FEM 317, may transmit, to the second RFIC 313, the signal received from the second antenna 323. The fifth reception chain 541 included in the third FEM 530 may transmit, to the second RFIC 313, the signal received from the third antenna 540.

According to various embodiments of the present disclosure, a frequency band that is processed by the reception chains connected to the second RFIC 313 may include a frequency band that is processed by the reception chains connected to the first RFIC 311. In the case of FIG. 5B, the second RFIC 313 may process a reception signal having the first frequency band, a reception signal having the second frequency band and/or a reception signal having the third frequency band. The first RFIC 311 may process a reception signal having the first frequency band and a reception signal having the second frequency band. The communication circuitry 310 may be configured so that the first RFIC 311 receives a reception signal included in a primary component carrier (PCC) and the second RFIC 313 receives a reception signal included in a secondary component carrier (SCC) in a communication method supporting a carrier aggregation.

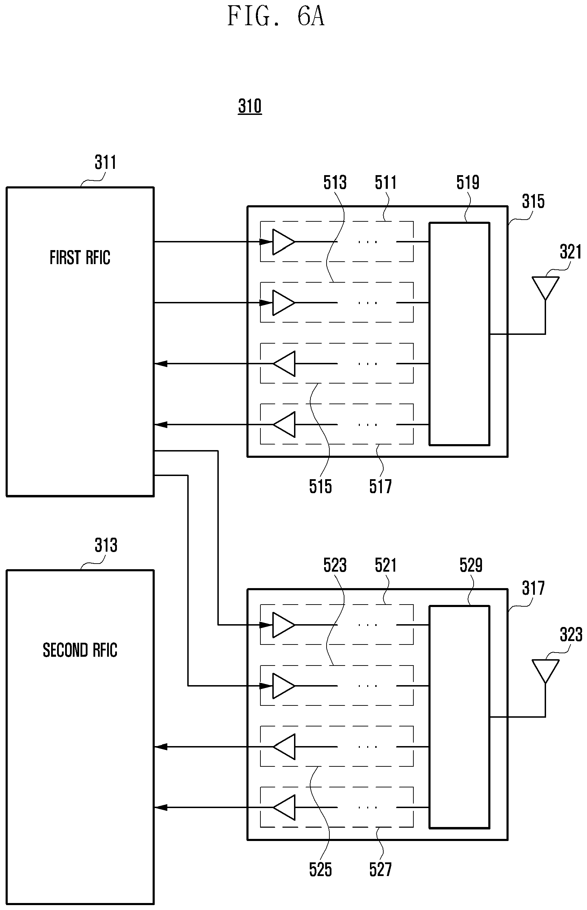

FIG. 6A is a diagram illustrating a connection structure for a communication circuitry according to various embodiments of the present disclosure.

Communication circuitry (e.g., the communication circuitry 310 in FIG. 3) according to various embodiments of the present disclosure may include a first RFIC (e.g., the first RFIC 311 in FIG. 3), a second RFIC (e.g., the second RFIC 313 in FIG. 3), a first FEM (e.g., the first FEM 315 in FIG. 3) and/or a second FEM (e.g., the second FEM 317 in FIG. 3). For a clear description, a description of the same or similar components, among the components illustrated in FIG. 3, is omitted.

According to various embodiments of the present disclosure, the first FEM 315 may include a first transmission chain 511, a second transmission chain 513, a first reception chain 513, a second reception chain 517 and/or a first switch 519.

According to various embodiments of the present disclosure, the first transmission chain 511 may include various parts (e.g., an amplifier and a filter) for outputting a transmission signal having the frequency of a first frequency band (e.g., a mid-band). The second transmission chain 513 may include various parts (e.g., an amplifier and a filter) for outputting a transmission signal having the frequency of a second frequency band (e.g., a high band) different from the first frequency band.

According to various embodiments of the present disclosure, the first reception chain 515 may include various parts (e.g., a low noise amplifier and a filter that filters the frequency of the first frequency band) for transmitting a reception signal having the frequency of the first frequency band. The second reception chain 517 may include various parts (e.g., a low noise amplifier and a filter that filters the frequency of the first frequency band) for transmitting a reception signal having the frequency of the second frequency band.

According to various embodiments of the present disclosure, the first switch 519 may connect at least one chain, among the first transmission chain 511, the second transmission chain 513, the first reception chain 515 and/or the second reception chain 517, and the first antenna 321. If a communication method that is supported by the first FEM 315 is time division duplex (TDD), the first switch 519 may connect one chain, among the first transmission chain 511, the second transmission chain 513, the first reception chain 515 and/or the second reception chain 517, and the first antenna 321 based on a designated time under the control of a communication processor (e.g., the communication processor 301 in FIG. 3). If a communication method that is supported by the first FEM 315 is frequency division duplex (FDD), the first switch 519 may be omitted, and a duplexer (or a diplexer) that separates signals having the first frequency band and the second frequency band may be connected to the first antenna 321.

According to various embodiments of the present disclosure, the second FEM 317 may include a third transmission chain 521, a fourth transmission chain 523, a third reception chain 525, a fourth reception chain 527 and/or a second switch 529.

According to various embodiments of the present disclosure, the third transmission chain 521 may include various parts (e.g., an amplifier and a filter) for outputting a transmission signal having the frequency of a first frequency band (e.g., a mid-band). The fourth transmission chain 523 may include various parts (e.g., an amplifier and a filter) for outputting a transmission signal having the frequency of a second frequency band (e.g., a high band) different from the first frequency band.

According to various embodiments of the present disclosure, the third reception chain 525 may include various parts (e.g., a low noise amplifier and a filter that filters the frequency of the first frequency band) for transmitting a reception signal having the frequency of the first frequency band. The fourth reception chain 527 may include various parts (e.g., a low noise amplifier and a filter that filters the frequency of the first frequency band) for transmitting a reception signal having the frequency of the second frequency band.

According to various embodiments of the present disclosure, the second switch 529 may connect at least one chain, among the third transmission chain 521, the fourth transmission chain 523, the third reception chain 525 and/or the fourth reception chain 527, and the second antenna 323. If a communication method that is supported by the second FEM 317 is time division duplex (TDD), the second switch 529 may connect one chain, among the third transmission chain 521, the fourth transmission chain 523, the third reception chain 525 and/or the fourth reception chain 527, and the second antenna 323 based on a designated time under the control of the communication processor 301. If a communication method that is supported by the second FEM 317 is frequency division duplex (FDD), the second switch 529 may be omitted, and a duplexer (or a diplexer) that separates signals having the first frequency band and the second frequency band may be connected to the second antenna 323.

According to various embodiments of the present disclosure, the first RFIC 311 may process a transmission signal and/or a reception signal having a plurality of frequency bands. According to an embodiment, the first RFIC 311 may be connected to a plurality of transmission chains (e.g., the first transmission chain 511, the second transmission chain 513, the third transmission chain 521 and/or the fourth transmission chain 523) included in the first FEM 315 and/or the second FEM 317, may process (e.g., convert the baseband frequency of a transmission signal into an RF frequency) a transmission signal received from the communication processor 301, and may transmit the processed signal to the plurality of transmission chains included in the first FEM 315 and/or the second FEM 317. The first RFIC 311 may transmit a transmission signal having the first frequency band to the first transmission chain 511 and/or the third transmission chain 521, and may transmit a transmission signal having the second frequency band to the second transmission chain 513 and/or the fourth transmission chain 523.

According to an embodiment, the first RFIC 311 may be connected to at least some reception chains (e.g., the first reception chain 515, the second reception chain 517), among the plurality of reception chains included in the first FEM 315, may process (e.g., convert the RF frequency of a reception signal into a baseband frequency) a reception signal received from the first antenna 321, and may transmit the processed signal to the communication processor 301. The reception chains included in the first FEM 315 may transmit, to the first RFIC 311, the signal received from the first antenna 321.

According to various embodiments of the present disclosure, the second RFIC 313 may process a reception signal having a plurality of frequency bands. According to an embodiment, the second RFIC 313 may be connected to at least some reception chains (e.g., the third reception chain 525 and/or the fourth reception chain 527), among the plurality of reception chains included in the second FEM 317, may process (e.g., convert the RF frequency of a reception signal into a baseband frequency) a reception signal received from the second antenna 323, and may transmit the processed signal to the communication processor 301. The third reception chain 525 and the fourth reception chain 527 connected to the second RFIC 313, among the reception chains included in the second FEM 317, may transmit, to the second RFIC 313, the signal received from the second antenna 323.

According to various embodiments of the present disclosure, the first RFIC 311 and/or the second RFIC 313 may be circuits having the same capability in relation to the processing of a transmission signal and the processing of a reception signal. The meaning of the circuits having the same capability may include that a frequency band and/or communication method (e.g., 3^{rd} generation mobile communication (3G), 4-th generation mobile communication (LTE), or 5-th generation mobile communication (NR)) of a transmission signal or reception signal capable of being processed by the first RFIC 311 are the same as a frequency band and/or communication method of a transmission signal or reception signal capable of being processed by the second RFIC 313. For example, the first RFIC 311 and the second RFIC 313 may include various components (e.g., an amplifier and/or a mixer) in order to process a transmission signal. The components for processing the transmission signal, which are included in the first RFIC 311 and the second RFIC 313, are the same components, and may process transmission signals having the same frequency band. As another example, the first RFIC 311 and the second RFIC 313 may include various components (e.g., an amplifier and/or a mixer) for processing a reception signal. The components for processing the reception signal, which are included in the first RFIC 311 and the second RFIC 313, are the same components, and may process reception signals having the same frequency band. According to an embodiment, the first RFIC 311 and the second RFIC 313 are the same circuits, and may be circuits having the same capability.

According to various embodiments of the present disclosure, the second RFIC 313 may not be connected to a transmission chain (e.g., the first transmission chain 511, the second transmission chain 513, the third transmission chain 521 and the fourth transmission chain 523) included in the first FEM 315 and/or the second FEM 317, and may not process a transmission signal although the second RFIC 313 has a component capable of processing the transmission signal.

According to various embodiments of the present disclosure, a frequency band (e.g., the first frequency band and the second frequency band) that is processed by reception chains (e.g., the first reception chain 515, the second reception chain 517) connected to the first RFIC 311 and a frequency band (e.g., the first frequency band and the second frequency band) that is processed by reception chains (e.g., the third reception chain 525 and the fourth reception chain 527) connected to the second RFIC 313 may be the same. According to an embodiment, the communication circuitry 310 may be configured so that the first RFIC 311 receives a primary reception signal (primary Rx (PRx)) and the second RFIC 313 receives a diversity reception signal (diversity Rx (DRx)) in a communication method using the first frequency band or the second frequency band. The frequency bands of the primary reception signal and the diversity reception signal may be the same.

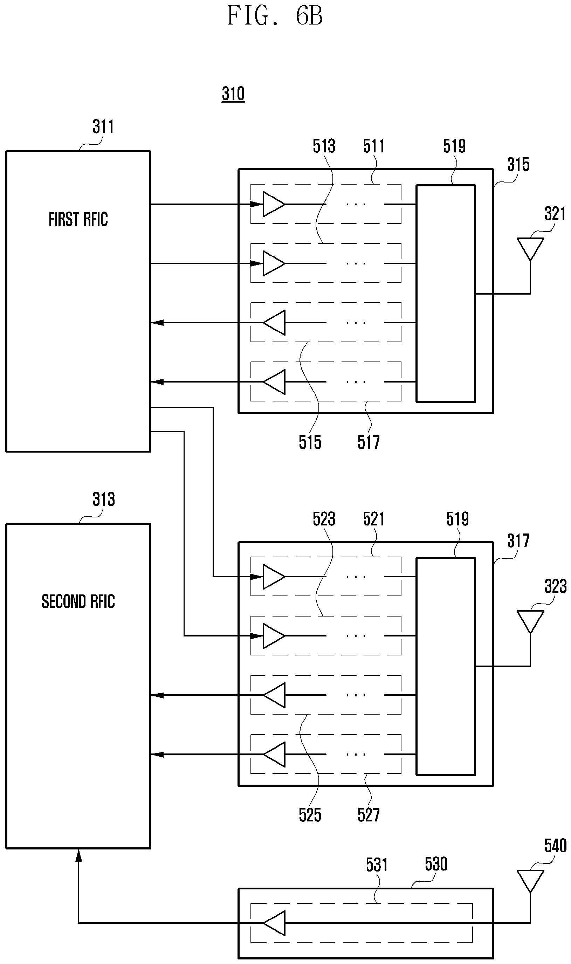

FIG. 6B is a diagram illustrating a connection structure for a communication circuitry according to various embodiments of the present disclosure.

Communication circuitry (e.g., the communication circuitry 310 in FIG. 3) illustrated in FIG. 6B may be a communication circuitry to which a component for receiving a reception signal having a third frequency band has been further added in the communication circuitry 310 illustrated in FIG. 6A.

Communication circuitry (e.g., the communication circuitry 310 in FIG. 3) according to various embodiments of the present disclosure may include a first RFIC (e.g., the first RFIC 311 in FIG. 3), a second RFIC (e.g., the second RFIC 313 in FIG. 3), a first FEM (e.g., the first FEM 315 in FIG. 3), a second FEM (e.g., the second FEM 317 in FIG. 3) and/or a third FEM 530. For a clear description, a description of the same or similar components, among the components illustrated in FIG. 6A, is omitted.

According to various embodiments of the present disclosure, the third FEM 530 may include a third reception chain 531. The fifth reception chain 531 may include various parts (e.g., a low noise amplifier and a filter that filters the frequency of the third frequency band) for transmitting a reception signal having the frequency of the third frequency band different from the first frequency band and the second frequency band. The third FEM 530 may transmit, to the second RFIC 313, a reception signal that has the third frequency band and that has been received through a third antenna 540.

According to various embodiments of the present disclosure, the second RFIC 313 may process a reception signal having a plurality of frequency bands. According to an embodiment, the second RFIC 313 may be connected to at least some reception chains (e.g., the third reception chain 525, the fourth reception chain 527 and/or the fifth reception chain 531), among the plurality of reception chains included in the first FEM 315, the second FEM 317 and/or the third FEM 530, may process (e.g., convert the RF frequency of a reception signal into a baseband frequency) a reception signal received from the second antenna 323 and/or the third antenna 540, and may transmit the processed signal to the communication processor 301. The third reception chain 525 and the fourth reception chain 527 connected to the second RFIC 313, among the reception chains included in the second FEM 317, may transmit, to the second RFIC 313, the signal received from the second antenna 323. The fifth reception chain 541 included in the third FEM 530 may transmit, to the second RFIC 313 the signal received from the third antenna 540.

According to various embodiments of the present disclosure, a frequency band that is processed by the reception chains connected to the second RFIC 313 may include a frequency band that is processed by the reception chains connected to the first RFIC 311. In the case of FIG. 6B, the second RFIC 313 may process a reception signal having the first frequency band, a reception signal having the second frequency band and/or a reception signal having the third frequency band. The first RFIC 311 may process a reception signal having the first frequency band and a reception signal having the second frequency band. The communication circuitry 310 may be configured so that the first RFIC 311 receives a reception signal included in a primary component carrier (PCC) and the second RFIC 313 receives a reception signal included in a secondary component carrier (SCC) in a communication method supporting a carrier aggregation.

FIG. 7 is a diagram illustrating a communication circuitry according to various embodiments of the present disclosure.

Communication circuitry (e.g., the communication circuitry 310 in FIG. 3) according to various embodiments of the present disclosure may include a first RFIC (e.g., the first RFIC 311 in FIG. 3), a second RFIC (e.g., the second RFIC 313 in FIG. 3), and a plurality of FEMs (a first FEM 710, a second FEM 720, a third FEM 730, a fourth FEM 740, a fifth FEM 750, a sixth FEM 760, a seventh FEM 770, an eighth FEM 780, a ninth FEM 810, a tenth FEM 820, an eleventh FEM 830 and/or a twelfth FEM 840). For a clear description, a description of the same or similar components, among the components illustrated in FIG. 3, is omitted.

According to various embodiments of the present disclosure, the first FEM 710 may include at least two reception chains. One reception chain, among at least two reception chains 712, may be connected to the first RFIC 311, and the remaining other reception chains may be connected to the second RFIC 313. The at least two reception chains 712 may be selectively connected to an antenna through a switch 711. The at least two reception chains 712 may share one amplifier module. The amplifier module may include a low noise amplifier (LNA) that amplifies a reception signal. The first FEM 710 may transmit a signal having a first frequency band (e.g., a low band), which has been received through an antenna (not illustrated), through the first RFIC 311 and/or the second RFIC 313.

According to various embodiments of the present disclosure, the second FEM 720 may include at least one transmission chain 721 and at least two reception chains 723. The at least one transmission chain may be connected to the first RFIC 311. At least some reception chains, among the at least two reception chains 723, may be connected to the first RFIC 311. The remaining some reception chains, among the at least two reception chains 723, may be connected to the second RFIC 313. The at least two reception chains 723 may be selectively connected to the antenna through a switch 725. The at least two reception chains 723 may share one amplifier module. The amplifier module may include a low noise amplifier (LNA) that amplifies a reception signal. The second FEM 720 may transmit a signal having a first frequency band (e.g., a low band), which has been received through an antenna (not illustrated), through the first RFIC 311 and/or the second RFIC 313. The second FEM 720 may process the transmission signal that has the first frequency band and that has been received from the first RFIC 311, and may output the transmission signal through the antenna.

According to various embodiments of the present disclosure, the third FEM 730 may include at least two transmission chains 731 and 732 and at least two reception chains 733. The at least two transmission chains 731 and 732 may be connected to the first RFIC 311. At least some reception chains, among the at least two reception chains 733, may be connected to the first RFIC 311. Other some reception chains, among the at least two reception chains 733, may be connected to the second RFIC 313. The at least two transmission chains 731 and 732 and the at least two reception chains 723 may be selectively connected to the antenna through a switch 734. The at least two reception chains 733 may share one amplifier module. The amplifier module may include a low noise amplifier (LNA) that amplifies a reception signal. The third FEM 730 may support the output of a transmission signal and the reception of a reception signal having at least two frequency bands. One transmission chain 731, among the at least two transmission chains 731 and 732, and some transmission chains, among the at least two reception chains 733, may process a transmission signal and/or a reception signal having a second frequency band (e.g., a mid-band). The other transmission chain 732, among the at least two transmission chains 731 and 732, and other some transmission chains, among the at least two reception chains 733, may process a transmission signal and/or a reception signal having a third frequency band (e.g., a high band). If the third FEM 730 supports at least two frequency bands, the frequency band of reception signals that are received by the first RFIC 311 and the second RFIC 313 from the third FEM 730 may be the same. The first RFIC 311 may be connected to a reception chain that supports the second frequency band and a reception chain that supports the third frequency band, among the at least two reception chains 733. The second RFIC 313 may be connected to a reception chain that supports the second frequency band and a reception chain that supports the third frequency band, among the at least two reception chains 733.

According to various embodiments of the present disclosure, the fourth FEM 740 may include at least two transmission chains 741 and 742 and at least two reception chains 743. The at least two transmission chains 741 and 742 may be connected to the first RFIC 311. At least some reception chains, among the at least two reception chains 743 may be connected to the first RFIC 311. Other some reception chains, among the at least two reception chains 743 may be connected to the second RFIC 313. The at least two transmission chains 741 and 742 and the at least two reception chains 743 may be selectively connected to the antenna through a switch 744. The at least two reception chains 743 may share one amplifier module. The amplifier module may include a low noise amplifier (LNA) that amplifies a reception signal. The fourth FEM 740 may support the output of a transmission signal and the reception of a reception signal having at least two frequency bands. One transmission chain 741, among the at least two transmission chains 741 and 742, and some transmission chains, among the at least two reception chains 743, may process a transmission signal and/or a reception signal having a second frequency band (e.g., a mid-band). The other transmission chain 742, among the at least two transmission chains 741 and 742, and other some transmission chains, among the at least two reception chains 743, may process a transmission signal and/or a reception signal having a third frequency band (e.g., a high band). If the fourth FEM 740 supports at least two frequency bands, the frequency bands of reception signals that are received by the first RFIC 311 and the second RFIC 313 from the fourth FEM 740 may be the same. The first RFIC 311 may be connected to a reception chain that supports the second frequency band and a reception chain that supports the third frequency band, among the at least two reception chains 743. The second RFIC 313 may be connected to a reception chain that supports the second frequency band and a reception chain that supports the third frequency band, among he at least two reception chains 743.

According to various embodiments of the present disclosure, the fifth FEM 750 is a circuit that supports the diversity reception of a reception signal having the second frequency band and the diversity reception of a reception signal having the third frequency band, and may include at least four reception chains 751. The at least four reception chain 751 may be selectively connected to the antenna through a switch 753. At least two reception chains that support the processing of a reception signal having the second frequency band, among the at least four reception chains 751, may be connected to the first RFIC 311 and the second RFIC 313. At least two reception chains that support the processing of a reception signal having the third frequency band, among the at least four reception chains 751, may be connected to the first RFIC 311 and the second RFIC 313.

According to various embodiments of the present disclosure, the sixth FEM 760 is a circuit that supports the diversity reception of a reception signal having the second frequency band and the diversity reception of a reception signal having the third frequency band, and may include at least four reception chains 761. The at least four reception chain 761 may be selectively connected to the antenna through a switch 763. At least two reception chains that support the processing of a reception signal having the second frequency band, among the at least four reception chains 761, may be connected to the first RFIC 311 and the second RFIC 313. At least two reception chains that support the processing of a reception signal having the third frequency band, among the at least four reception chains 761, may be connected to the first RFIC 311 and the second RFIC 313.

According to various embodiments of the present disclosure, the seventh FEM 770 is a process that processes a transmission signal and/or a reception signal having a fourth frequency band (e.g., an ultra-high band (UHB)), and may include at least one transmission chain 771 and/or at least two reception chains 772. The at least two reception chains 772 may be selectively connected to the antenna through a switch 773. One reception chain, among the at least two reception chains 772, may be connected to the first RFIC 331, and the other reception chain may be connected to the second RFIC 333. The at least two reception chains 772 may share one amplifier module. The amplifier module may include a low noise amplifier (LNA) that amplifies a reception signal. The seventh FEM 770 may transmit a reception signal having the fourth frequency band, which has been received through an antenna (not illustrated), through the first RFIC 311 and/or the second RFIC 313. The at least one transmission chain 771 may be connected to the first RFIC 311, and may output a transmission signal having the fourth frequency band through the antenna.

According to various embodiments of the present disclosure, the eighth FEM 780 is a circuit that processes a transmission signal and/or a reception signal having a fourth frequency band (e.g., an ultra-high band (UHB)), and may include at least one transmission chain 781 and/or at least two reception chains 782. The at least two reception chains 782 may be selectively connected to the antenna through a switch 783. One reception chain, among the at least two reception chains 782, may be connected to the first RFIC 331, and the other reception chain may be connected to the second RFIC 333. The at least two reception chains 782 may share one amplifier module. The amplifier module may include a low noise amplifier (LNA) that amplifies a reception signal. The eighth FEM 780 may transmit a reception signal having the fourth frequency band, which has been received through an antenna (not illustrated), through the first RFIC 311 and/or the second RFIC 313. The at least one transmission chain 781 may be connected to the first RFIC 311, and may output a transmission signal having the fourth frequency band through the antenna.

According to various embodiments of the present disclosure, the ninth FEM 810 is a circuit that processes a transmission signal and/or a reception signal having a fourth frequency band (e.g., an ultra-high band (UHB)), and may include at least one transmission chain 811 and/or at least two reception chains 812. The at least two reception chains 812 may be selectively connected to the antenna through a switch 813. One reception chain, among the at least two reception chains 812, may be connected to the first RFIC 311, and the other reception chain may be connected to the second RFIC 313. The at least two reception chains 812 may share one amplifier module. The amplifier module may include a low noise amplifier (LNA) that amplifies a reception signal. The ninth FEM 810 may transmit a reception signal having the fourth frequency band, which has been received through an antenna (not illustrated), through the first RFIC 311 and/or the second RFIC 313. The at least one transmission chain 811 may be connected to the first RFIC 311, and may output a transmission signal having the fourth frequency band through the antenna.

According to various embodiments of the present disclosure, the tenth FEM 820 may include at least two reception chains. One reception chain, among the at least two reception chains 821, may be connected to the first RFIC 311, and the remaining other reception chains may be connected to the second RFIC 313. The at least two reception chains 821 may be selectively connected to the antenna through a switch 823. The at least two reception chains 821 may share one amplifier module. The amplifier module may include a low noise amplifier (LNA) that amplifies a reception signal. The tenth FEM 820 may transmit a signal having the fourth frequency band, which has been received through an antenna (not illustrated), through the first RFIC 311 and/or the second RFIC 313.

According to various embodiments of the present disclosure, the eleventh FEM 830 is a circuit for receiving a signal having the fifth frequency band capable of only the reception of a reception signal, and may include at least one reception chain 831. The at least one reception chain 831 may be connected to the second RFIC 313, and may transmit a reception signal having a sixth frequency band through the second RFIC 313.

According to various embodiments of the present disclosure, the twelfth FEM 840 is a circuit for receiving a signal having a fifth frequency band capable of only the reception of a reception signal, and may include at least one reception chain 841. The at least one reception chain 841 may be connected to the second RFIC 313, and may transmit a reception signal having the sixth frequency band to the second RFIC 313.

According to various embodiments of the present disclosure, the first RFIC 311 and/or the second RFIC 313 may be a circuit having the same capability in relation to the processing of a transmission signal and the processing of a reception signal. The meaning of the circuits having the same capability may include that a frequency band and/or communication method (e.g., 3^{rd} generation mobile communication (3G), 4-th generation mobile communication (LTE), or 5-th generation mobile communication (NR)) of a transmission signal or reception signal capable of being processed by the first RFIC 311 are the same as a frequency band and/or communication method of a transmission signal or reception signal capable of being processed by the second RFIC 313. For example, the first RFIC 311 and the second RFIC 313 may include various components (e.g., an amplifier and/or a mixer) in order to process a transmission signal. The components for processing the transmission signal, which are included in the first RFIC 311 and the second RFIC 313, are the same components, and may process transmission signals having the same frequency band. As another example, the first RFIC 311 and the second RFIC 313 may include various components (e.g., an amplifier and/or a mixer) for processing a reception signal. The components for processing the reception signal, which are included in the first RFIC 311 and the second RFIC 313, are the same components, and may process reception signals having the same frequency band. According to an embodiment, the first RFIC 311 and the second RFIC 313 are the same circuits, and may be circuits having the same capability.

According to various embodiments of the present disclosure, the second RFIC 313 may not be connected to the transmission chain included in the first FEM 315 and/or the second FEM 317, and may not process a transmission signal although the second RFIC 313 has a component capable of processing the transmission signal.

According to various embodiments of the present disclosure, a frequency band that is processed by the reception chains connected to the first RFIC 311 and a frequency band that is processed by the reception chains connected to the second RFIC 313 may be the same. According to an embodiment, the communication circuitry 310 may be configured so that the first RFIC 311 receives a primary reception signal (primary Rx (PRx)) and the second RFIC 313 receives a diversity reception signal (diversity Rx (DRx)) in a communication method using a specific frequency band. The frequency bands of the primary reception signal and the diversity reception signal may be the same.

According to various embodiments of the present disclosure, a frequency band that is processed by the reception chains connected to the second RFIC 313 may include a frequency band that is processed by the reception chains connected to the first RFIC 311. The communication circuitry 310 may be configured so that the first RFIC 311 receives a reception signal included in a primary component carrier (PCC) and the second RFIC 313 receives a reception signal included in a secondary component carrier (SCC) in a communication method supporting a carrier aggregation.

According to various embodiments of the present disclosure, the communication circuitry 310 may support a carrier aggregation. Hereinafter, an embodiment of the communication circuitry 310 supporting a carrier aggregation is described.

If the communication circuitry 310 supports a carrier aggregation, some reception chains, among the reception chains 711 of the first FEM 710, may transmit a diversity reception signal having a B13 band (e.g., 746 to 756 MHz) to the first RFIC 311, and other some reception chains may transmit the reception signal having the B13 band (e.g., 746 to 756 MHz) to the second RFIC 313. Some reception chains, among the reception chains 723 of the second FEM 720, may transmit a primary reception signal (PRx) having the B13 band (e.g., 746 to 756 MHz) to the first RFIC 311, and other some reception chains may transmit the signal having the B13 band to the second RFIC 313. Some reception chains, among the reception chains 733 of the third FEM 730, may transmit a diversity reception signal (DRx) having a B2 band (e.g., 1930 to 1990 MHz) to the first RFIC 311, and other some reception chains may transmit a reception signal (DP) having a B66 band (2110 to 2220 MHz) to the second RFIC 313. Some transmission chains 741, among the transmission chains 741 and 742 of the fourth FEM 740, may output a transmission signal having a B2 band (e.g., 1850 to 1910 MHz) to the antenna. At least some reception chains, among the reception chains 743 of the fourth FEM 740, may transmit a primary reception signal having the B2 band to the first RFIC 311, and other some reception chains may transmit a reception signal having the B66 band to the first RFIC 311. Some reception chains, among the reception chains 751 of the fifth FEM 750, may transmit a diversity reception signal having the B2 band to the first RFIC 311 (MIMO), and other some reception chains may transmit a reception signal having the B66 band to the first RFIC 311. Some reception chains, among the reception chains 761 of the sixth FEM 760, may transmit a diversity reception signal having the B2 band to the first RFIC 311 (MIMO), and other some reception chains may transmit a reception signal having the B66 band to the first RFIC 311. Some reception chains, among the reception chains 772 of the seventh FEM 770, may transmit a primary reception signal having a B48 band (e.g., 3550 to 3700 MHz) to the first RFIC 311, and other some reception chains may transmit the primary reception signal having the B48 band to the first RFIC 311 (MIMO). Some reception chains, among the reception chains 782 of the eighth FEM 780, may transmit a diversity reception signal having the B48 band to the first RFIC 311, and other some reception chains may transmit the diversity reception signal having the B48 band to the first RFIC 311 (MIMO). Some reception chains 831 of the eleventh FEM 830 may transmit a primary reception signal having a B46 band (e.g., 5150 to 5925 MHz) to the second RFIC 313. Some reception chains 841 of the twelfth FEM 840 may transmit a diversity reception signal having the B46 band to the second RFIC 313.

According to various embodiments of the present disclosure, the communication circuitry 310 may support communication using a dual connectivity method. Hereinafter, an embodiment of the communication circuitry 310 supporting dual connectivity is described.

If the communication circuitry 310 supports dual connectivity, some reception chains, among the reception chains 711 of the first FEM 710, may transmit a diversity reception signal having a B 13 band to the first RFIC 311, and other some reception chains may transmit the reception signal having the B13 band to the second RFIC 313. Some reception chains, among the reception chains 723 of the second FEM 720, may transmit a primary reception signal (PRx) having the B 13 band to the first RFIC 311, and other some reception chains may transmit the signal having the B13 band to the second RFIC 313. Some reception chains, among the reception chains 733 of the third FEM 730, may transmit a diversity reception signal (DRx) having the B2 band to the first RFIC 311, and other some reception chains may transmit a diversity reception signal having the B66 band to the second RFIC 313. Some transmission chains 741, among the transmission chains 741 and 742 of the fourth FEM 740, may output a transmission signal having the B2 band to the antenna. At least some reception chains, among the reception chains 743 of the fourth FEM 740, may transmit a primary reception signal having the B2 band to the first RFIC 311, and other some reception chains may transmit a primary reception signal having the B66 band to the first RFIC 311. Some reception chains, among the reception chains 751 of the fifth FEM 750, may transmit a diversity reception signal having the B2 band to the first RFIC 311 (MIMO), and other some reception chains may transmit the diversity reception signal having the B66 band to the first RFIC 311 (MIMO). Some reception chains, among the reception chains 761 of the sixth FEM 760, may transmit a diversity reception signal having the B2 band to the first RFIC 311 (MIMO), and other some reception chains may transmit a diversity reception signal having the B66 band to the first RFIC 311 (MIMO). At least some transmission chains, among the transmission chains 771 of the seventh FEM 770, may output a transmission signal having an n77 band (e.g., 3300 to 4200 MHz). Some reception chains, among the reception chains 772 of the seventh FEM 770, may transmit a primary reception signal having the n77 band to the first RFIC 311, and other some reception chains may transmit the primary reception signal having the n77 band to the first RFIC 311 (MIMO). Some reception chains, among the reception chains 782 of the eighth FEM 780, may transmit a diversity reception signal having the n77 band to the first RFIC 311, and other some reception chains may transmit the diversity reception signal having the n77 band to the first RFIC 311 (MIMO).

Communication circuitry according to various embodiments of the present disclosure may include a first RFIC configured to process a transmission signal and a reception signal having a plurality of frequency bands; a second RFIC configured to process a reception signal having the plurality of frequency bands; a first front end module (FEM) electrically connected to the first RFIC and the second RFIC; and a second FEM electrically connected to the first RFIC and the second RFIC, wherein the first RFIC is connected to at least some reception chains, among a plurality of transmission chains included in the first FEM and the second FEM and a plurality of reception chains included in the first FEM and the second FEM, the second RFIC is connected to other some reception chains, among the plurality of reception chains included in the first FEM and the second FEM, and a frequency band of a reception signal capable of being processed by the first RFIC is the same as a frequency band of a reception signal capable of being processed by the second RFIC.

In the communication circuitry according to various embodiments of the present disclosure, a frequency band corresponding to a plurality of reception chains connected to the second RFIC may include a frequency band corresponding to a plurality of reception chains connected to the first RFIC.

In the communication circuitry according to various embodiments of the present disclosure, the first RFIC may be configured to receive a primary reception signal (primary Rx (PRx)) or a signal having a primary component carrier (PCC) band.

In the communication circuitry according to various embodiments of the present disclosure, the second RFIC may be configured to receive a diversity reception signal (diversity Rx (DRx)) or a signal having a secondary component carrier (SCC) band.

In the communication circuitry according to various embodiments of the present disclosure, the second RFIC may not be connected to the plurality of transmission chains included in the first FEM and the second FEM.

In the communication circuitry according to various embodiments of the present disclosure, the second RFIC may be configured to receive a reception signal having a frequency band including only the reception signal.

The communication circuitry according to various embodiments of the present disclosure the communication circuitry may further include a third FEM connected to the second RFIC and including a plurality of reception chains. The second RFIC may receive a reception signal having a frequency band including only the reception signal through the third FEM.

In the communication circuitry according to various embodiments of the present disclosure, the third FEM may not be connected to the first RFIC.

In the communication circuitry according to various embodiments of the present disclosure, a frequency band of a transmission signal capable of being processed by the first RFIC may be identical with a frequency band of a transmission signal capable of being processed by the second RFIC.

In the communication circuitry according to various embodiments of the present disclosure, the first FEM may include a first transmission chain configured to process a transmission signal having a first frequency band; a second transmission chain configured to process a transmission signal having the first frequency band; a first reception chain configured to process a reception signal having the first frequency band; and a second reception chain configured to process a reception signal having the first frequency band. The first transmission chain, the second transmission chain, and the first reception chain may be connected to the first RFIC. The second reception chain may be connected to the second RFIC.

In the communication circuitry according to various embodiments of the present disclosure, the second FEM may include a third transmission chain configured to process a transmission signal having a second frequency band; a fourth transmission chain configured to process a transmission signal having the second frequency band; a third reception chain configured to process a reception signal having the second frequency band; and a fourth reception chain configured to process a reception signal having the second frequency band. The third transmission chain, the fourth transmission chain, and the third reception chain may be connected to the first RFIC. The fourth reception chain may be connected to the second RFIC.

An electronic device according to various embodiments of the present disclosure may include a communication processor and a communication circuitry. The communication circuitry may include a first RF integrated circuit (RFIC) configured to process a transmission signal and a reception signal having a plurality of frequency bands; a second RFIC configured to process a reception signal having the plurality of frequency bands; a first front end module (FEM) electrically connected to the first RFIC and the second RFIC; and a second FEM electrically connected to the first RFIC and the second RFIC. The first RFIC may be connected to at least some reception chains, among a plurality of transmission chains included in the first FEM and the second FEM and a plurality of reception chains included in the first FEM and the second FEM. The second RFIC may be connected to other some reception chains, among the plurality of reception chains included in the first FEM and the second FEM. A frequency band of a reception signal capable of being processed by the first RFIC may be identical with a frequency band of a reception signal capable of being processed by the second RFIC.

In the electronic device according to various embodiments of the present disclosure, the communication processor may be configured to control the first RFIC so that the transmission signal is transmitted to the first RFIC and the transmission signal is transmitted to any one transmission chain, among the transmission chain of the first FEM or the transmission chain of the second FEM.

In the electronic device according to various embodiments of the present disclosure, the communication processor may be configured to receive, from the first RFIC, a primary reception signal (primary Rx) and/or a reception signal having a primary component carrier (PCC) band, which is received through the reception chain of the first FEM.

In the electronic device according to various embodiments of the present disclosure, the communication processor may be configured to receive, from the second RFIC, a diversity reception signal (diversity Rx (DRx)) or a reception signal having a secondary component carrier (SCC) band, which is received through the reception chain of the second FEM.

In the electronic device according to various embodiments of the present disclosure, the second RFIC may not be connected to the plurality of transmission chains included in the first FEM and the second FEM.

In the electronic device according to various embodiments of the present disclosure, the communication circuitry may further include a third FEM connected to the second RFIC and including a plurality of reception chains. The communication processor may be configured to receive, from the second RFIC, a reception signal having a frequency band including only the reception signal.

In the electronic device according to various embodiments of the present disclosure, a frequency band of a transmission signal capable of being processed by the first RFIC may be identical with a frequency band of a transmission signal capable of being processed by the second RFIC.

In the electronic device according to various embodiments of the present disclosure, the first FEM may include a first transmission chain configured to process a transmission signal having a first frequency band; a second transmission chain configured to process a transmission signal having the first frequency band; a first reception chain configured to process a reception signal having the first frequency band; and a second reception chain configured to process a reception signal having the first frequency band. The first transmission chain, the second transmission chain, and the first reception chain may be connected to the first RFIC. The second reception chain may be connected to the second RFIC.

In the electronic device according to various embodiments of the present disclosure, the second FEM may include a third transmission chain configured to process a transmission signal having a second frequency band; a fourth transmission chain configured to process a transmission signal having the second frequency band; a third reception chain configured to process a reception signal having the second frequency band; and a fourth reception chain configured to process a reception signal having the second frequency band. The third transmission chain, the fourth transmission chain, and the third reception chain may be connected to the first RFIC. The fourth reception chain may be connected to the second RFIC.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. Communication circuitry comprising:
a first RF integrated circuit (RFIC) configured to process a transmission signal and a reception signal having a plurality of frequency bands;
a second RFIC configured to process a reception signal having the plurality of frequency bands;
a first front end module (FEM) electrically connected to the first RFIC and the second RFIC; and
a second FEM electrically connected to the first RFIC and the second RFIC,
wherein the first RFIC is connected to at least some reception chains, among a plurality of transmission chains included in the first FEM and the second FEM and a plurality of reception chains included in the first FEM and the second FEM, and
the second RFIC is connected to other some reception chains, among the plurality of reception chains included in the first FEM and the second FEM, and
a frequency band of a reception signal capable of being processed by the first RFIC is identical with a frequency band of a reception signal capable of being processed by the second RFIC.

2. The communication circuitry of claim 1, wherein a frequency band corresponding to a plurality of reception chains connected to the second RFIC comprises a frequency band corresponding to a plurality of reception chains connected to the first RFIC.

3. The communication circuitry of claim 1, wherein the first RFIC is configured to receive a primary reception signal (primary Rx (PRx)) or a signal having a primary component carrier (PCC) band.

4. The communication circuitry of claim 1, wherein the second RFIC is configured to receive a diversity reception signal (diversity Rx (DRx)) or a signal having a secondary component carrier (SCC) band.

5. The communication circuitry of claim 1, wherein the second RFIC is not connected to the plurality of transmission chains included in the first FEM and the second FEM.

6. The communication circuitry of claim 1, wherein the second RFIC is configured to receive a reception signal having a frequency band comprising only the reception signal.

7. The communication circuitry of claim 1, wherein:
the communication circuitry further comprises a third FEM connected to the second RFIC and comprising a plurality of reception chains, and
the second RFIC receives a reception signal having a frequency band comprising only the reception signal through the third FEM.

8. The communication circuitry of claim 7, wherein the third FEM is not connected to the first RFIC.

9. The communication circuitry of claim 1, wherein a frequency band of a transmission signal capable of being processed by the first RFIC is identical with a frequency band of a transmission signal capable of being processed by the second RFIC.

10. The communication circuitry of claim 1, wherein the first FEM comprises:
a first transmission chain configured to process a transmission signal having a first frequency band;
a second transmission chain configured to process a transmission signal having the first frequency band;
a first reception chain configured to process a reception signal having the first frequency band; and
a second reception chain configured to process a reception signal having the first frequency band,
wherein the first transmission chain, the second transmission chain, and the first reception chain are connected to the first RFIC, and
the second reception chain is connected to the second RFIC.

11. The communication circuitry of claim 1, wherein the second FEM comprises:
a third transmission chain configured to process a transmission signal having a second frequency band;
a fourth transmission chain configured to process a transmission signal having the second frequency band;
a third reception chain configured to process a reception signal having the second frequency band; and
a fourth reception chain configured to process a reception signal having the second frequency band,
wherein the third transmission chain, the fourth transmission chain, and the third reception chain are connected to the first RFIC, and
the fourth reception chain is connected to the second RFIC.

12. An electronic device comprising:
a communication processor; and
a communication circuitry,
wherein the communication circuitry comprises:
a first RF integrated circuit (RFIC) configured to process a transmission signal and a reception signal having a plurality of frequency bands;
a second RFIC configured to process a reception signal having the plurality of frequency bands;
a first front end module (FEM) electrically connected to the first RFIC and the second RFIC; and
a second FEM electrically connected to the first RFIC and the second RFIC,
wherein the first RFIC is connected to at least some reception chains, among a plurality of transmission chains included in the first FEM and the second FEM and a plurality of reception chains included in the first FEM and the second FEM, and
the second RFIC is connected to other some reception chains, among the plurality of reception chains included in the first FEM and the second FEM, and
a frequency band of a reception signal capable of being processed by the first RFIC is identical with a frequency band of a reception signal capable of being processed by the second RFIC.

13. The electronic device of claim 12, wherein the communication processor is configured to control the first RFIC so that the transmission signal is transmitted to the first RFIC and the transmission signal is transmitted to any one transmission chain, among the transmission chain of the first FEM or the transmission chain of the second FEM.

14. The electronic device of claim 12, wherein the communication processor is configured to receive, from the first RFIC, a primary reception signal (primary Rx) and/or a reception signal having a primary component carrier (PCC) band, which is received through the reception chain of the first FEM.

15. The electronic device of claim 12, wherein the communication processor is configured to receive, from the second RFIC, a diversity reception signal (diversity Rx (DRx)) or a reception signal having a secondary component carrier (SCC) band, which is received through the reception chain of the second FEM.
